# EUROPEAN PATENT APPLICATION

(11) **EP 4 625 770 A1**
(43) Date of publication of application: **01.10.2025**
(21) Application number: 24166509.0
(22) Date of filing: 26.03.2024
(51) Int. Cl.: H02K 1/28, H02K 41/03

(54) **SECONDARY PART OF AN IRONLESS LINEAR MOTOR AND IRONLESS LINEAR MOTOR**

(71) Applicant: ETEL S.A., 2112 Môtiers (CH)
(72) Inventor: Gaffuri, Michele, 2108 Couvet (CH); Bischoff, Pierre Alexandre, 1148 Mont-la-Ville (CH); Tamigniaux, Philippe, 25500 Morteau (FR)
(74) Representative: P&TS SA (AG, Ltd.)

(57) **Abstract**

The invention relates to a secondary part (10) for an ironless linear motor, comprising two yoke plates (12a, 12b) having an inner side (13) and an outer side (14), a first and a second set of permanent magnets (16a, 16b) fixed on the inner side (14) of respective yoke plates, a spacer member (30) mounted between the two yoke plates and a reinforcing structure (20). The reinforcing structure (20) comprises a reinforcing part (20a) arranged on the outer side (14) of respective yoke plates (12a, 12b) and a fixing part (20b) fixed on respective opposite sides (32a, 32b) of the spacer member (30) such that the first and second set of permanent magnets (16a, 16b) are facing each other to define a magnetic path (40) for a primary part of the linear motor. The fixing part (20b) of the reinforcing structure (20) covers less than 80% of the surface of respective opposite sides (32a, 32b) of the spacer member (30). The invention also relates to the ironless linear motor comprising such secondary part (10).

## Description

### Field of the invention

The present invention relates to the field of linear motor and more particularly to a low-weight secondary part of an ironless linear motor and to an ironless linear motor comprising such secondary part. This ironless linear motor is particularly suited for a motion system comprising XY motorized stages such as semiconductor processing equipment.

### Background of the invention

Linear motors are used, for example, when there is a need for highly accurate and, in some instances, also rapid positioning of objects, such as a machine part of a machine tool. The primary part of the linear motor can thereby be directly connected via a suitable interface to the machine part to be moved.

What are generally referred to as ironless linear motors are primarily suited for applications that require an especially precise positioning where at least one coil provided on the primary part does not have an associated core, such as an iron core to reduce the weight. Disturbing cogging thrusts can thereby be avoided. However, to be able to generate high enough forces on the primary part of the linear motor, even without a core, correspondingly higher coil currents are required. The coils are generally provided in the form of preformed individual coils, and then installed to produce the electric motor.

The secondary part of the linear motor should also be weight optimized. This is particularly the case when the secondary part, together with the primary part, thus the entire motor, is coupled to the primary part of another motor to realize an X-Y drive.

At the same time, the secondary part must meet stability requirements. The yoke plates of the secondary part, which are equipped with permanent magnets and form the magnetic path for the primary part, are subject to constant forces due to the magnetic field of the permanent magnets. This can lead to bending and thus deformation of the magnetic path. Excessive bending or deformation of the secondary part could lead to the primary part contacting the secondary part and thereby damaging the permanent magnets. This could be avoided by enlarging the air gap which leads to greater tolerance to deformation. However, this would be accompanied by performance losses. It is therefore preferable to reinforce the secondary part.

In this context, EP3471245 discloses a secondary part defining a magnetic path for a primary part of a linear motor. The secondary part comprises a spacer and two yoke plates connected to the spacer such that the yoke plates are lying opposite one another and extend perpendicularly to the magnetic path. An external side of each yoke plate comprises a reinforcing structure with periodic variation in the thickness of the plate in the direction of the magnetic path.

US6803682B1 discloses similarly a secondary part comprising two yoke plates having each a greater cross-sectional dimension at locations between adjacent pairs of the magnets than at locations generally aligned with centres of the respective magnets. The force output to moving mass ratio of a motor incorporating such secondary part is improved over conventional configurations of magnet assemblies.

### Brief summary of the invention

An aim of the present invention is to provide a secondary part of a linear motor with a reinforcing structure according to an alternative configuration.

Another aim of the present invention is to provide an ironless linear motor comprising such secondary part or a secondary part assembly comprises several secondary parts assembled adjacently together.

These aims are achieved, notably, by a secondary part for an ironless linear motor, comprising two yoke plates having an inner side and an outer side, a first and a second set of permanent magnets fixed on the inner side of respective yoke plates, a spacer member mounted between the two yoke plates and a reinforcing structure. The reinforcing structure comprises a reinforcing part arranged on the outer side of respective yoke plates and a fixing part fixed on respective opposite sides of the spacer member such that the first and second set of permanent magnets are facing each other to define a magnetic path for a primary part of the linear motor. The fixing part of the reinforcing structure covers less than 80% of the surface of respective opposite sides of the spacer member.

In an embodiment, the fixing part of the reinforcing structure covers less than 60%, preferably less than 50%, of the surface of respective opposite sides of the spacer member.

In an embodiment, the reinforcing part of the reinforcing structure comprises reinforcing beams spaced apart from each other and extending from a top side to a bottom side of the outer side of respective yoke plates.

In an embodiment, each reinforcing beam has a rectangular shape and is centered at the interface between two adjacent permanent magnets.

In an embodiment, the fixing part of the reinforcing structure comprises legs fixed to respective opposite sides of the spacer member and spaced apart from each other to form periodic cut-out portions therebetween.

In an embodiment, each leg comprises a fastening bore aligned with a centered reinforcing beam. Each leg further comprises two inclined beams forming an integral part with two additional reinforcing beams arranged on both sides of the centered reinforcing beam.

In an embodiment, each cut-out portion has a substantially triangular shape.

In an embodiment, the spacer member comprises a plurality of assembly holes between each pair of legs for fixing the secondary part to a machine part.

In an embodiment, the reinforcing part of the reinforcing structure forms an integral part with respective yoke plates.

In an embodiment, the reinforcing structure has a uniform thickness.

In an embodiment, the spacer member is in aluminum or in an aluminum alloy.

Another aspect of the invention relates to a secondary part assembly comprising several secondary parts according to any of the above-described embodiment. The spacer member and respective yoke plates of each secondary part are disposed adjacently in the longitudinal direction of the magnetic path with the spacer member and respective yoke plates of an adjacent secondary part.

In an embodiment, the assembly comprises a casing having a rectangular recess receiving the secondary parts. The recess comprises fixing parts against which the spacer member of each secondary part is fixedly mounted.

In an embodiment, the casing further comprises a longitudinal slit aligned with the magnetic path of each secondary part.

Another aspect of the invention relates to an ironless linear motor comprising the secondary part according to any of the above-described embodiment or the secondary part assembly and a primary part movably mounted within the magnetic path of the secondary part or the secondary part assembly.

### Brief description of the drawings

The invention will be better understood with the aid of the description of embodiments given by way of examples and illustrated by the figures, in which:
- Figure 1 shows a perspective view of the secondary part of an ironless motor with a reinforcing structure according to an embodiment of the invention;
- Figure 2 shows a top view of the secondary part of Figure 1,
- Figure 3 shows a side view of the secondary part of Figure 1, and
- Figure 4 shows a perspective view of a secondary part assembly with an open side showing two secondary parts and one being assembled.

### Detailed description of several embodiments of the invention

With reference to the figures illustrating a preferred embodiment, a secondary part 10 defines a magnetic path 40 for a primary part (not shown) of an ironless linear motor, comprising a series of coils arranged to be energized by an alternative current. The secondary part 10 comprises a spacer member 30, two yoke plates 12a, 12b that form lateral sides of the secondary part and extending in mutual opposition, orthogonally to the magnetic path 40. These two yoke plates are fastened to the spacer member 30 through a reinforcing structure 20 arranged on an outer side 14 of respective yoke plates 12a, 12b as described in detail thereafter.

A first set of permanent magnets 16a are fixed next to each other on an inner side 13 of first yoke plate 12a while a second set of permanent magnets 16b are fixed next to each other on an inner side 13 of the second yoke plate 12b to define the magnetic path 40 for the primary part of the linear motor. The first and second set of permanent magnets 16a, 16b are fixed for example by glue and disposed with alternating poles beside one another and with alternating poles opposite one another.

The two yoke plates 12a, 12b are made of a high magnetic permeability material, such as steel, to guide the magnetic field generated by the permanent magnets 16a, 16b to improve the performance of the linear motor.

The spacer member 30 is preferably in a low-weight material such as aluminium or an aluminium alloy to limit as much as possible the weight of the secondary part. The low relative magnetic permeability of aluminium or aluminium alloy does not impact the performance of the linear motor as the space member 30 is located outside the magnetic field created within the magnetic path 40. The spacer member 30 has a U-shaped cross-section to form a groove along the magnetic path.

The reinforcing structure 20 for both yoke plates 12a, 12b is essential to withstand constant forces due to the magnetic field of the permanent magnets, thereby avoiding bending of the yoke plates and thus deformation of the magnetic path 40. The reinforcing structure 20 comprises a reinforcing part 20a, which may form an integral part with respective yoke plates 12a, 12b, and a fixing part 20b fixed to the spacer member 30. The reinforcing part 20a of the reinforcing structure 20 may have a uniform thickness as illustrated. The reinforcing part may be tapered by a milling operation or similarly structurally formed and locally narrowed in terms of the thickness thereof according to a variant.

In a non-illustrated alternative embodiment, the reinforcing structure may be fixed as a separate element on the outer side of respective yoke plates, for example, adhesively bonded thereto or fastened in some other way.

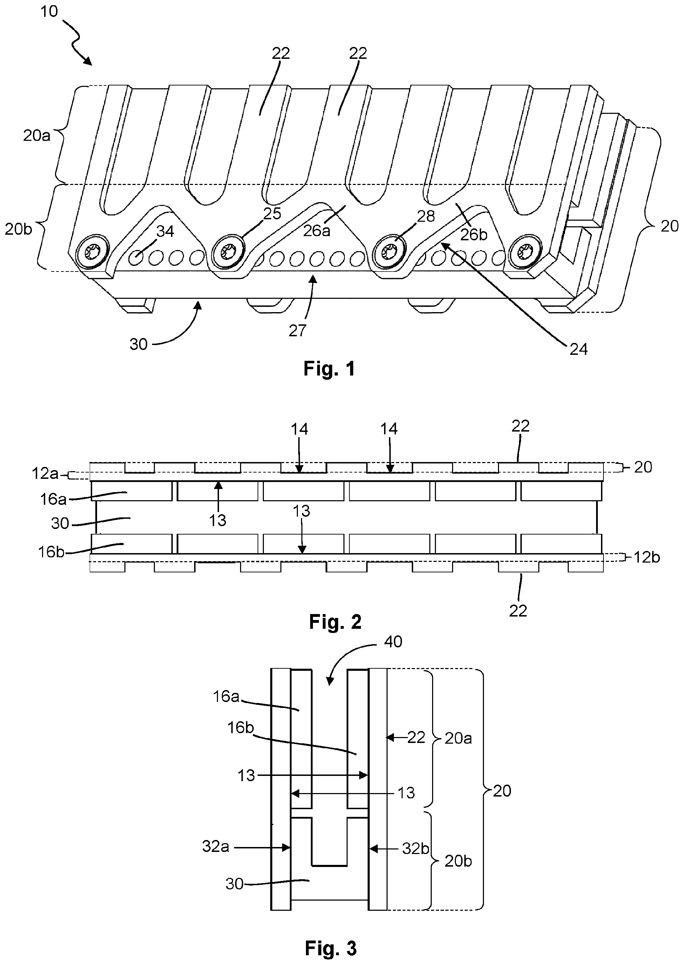

The opposite sides 32a, 32b (Figure 3) of the spacer member 30 comprises fixing holes (not visible), for example threaded holes, that are configured to accommodate fastening means 28, for example screws. In a non-illustrated variant, the space member may comprise at least two singles bores extending across its two opposite sides. The two yoke plates are assembled to the space member with screw posts, also known as Chicago screws, as disclosed in US10931188B2.

As shown in Figure 1, the fixing part 20b comprises a plurality of legs 24 comprising each a fastening bore 25 for fastening means 28 which are fitted into the fixing holes arranged on respective opposite sides 32a, 32b of the spacer member 30 to set a constant gap between the first and second set of permanent magnets 16a, 16b.

The legs 24 are spaced apart from each other along the magnetic path to form periodic cut-out portions 27 to reduce the weight of the secondary part. The fixing part 20b of the reinforcing structure thus does not cover the entirety of spacer member opposites sides 32a, 32b but only a fraction thereof. The fixing part may therefore cover less than 80% of the total surface of the spacer member opposites sides and preferably less than 60%, or even less than 50%, 40% or 30% or even further.

In the illustrated embodiment, the cut-out portions 27 between each pair of legs 24 have a substantially triangular shape. This specific shape results from the configuration of at least some legs which comprise each a fastening bore 25 for receiving the fastening means 28. Each fastening bore 25 is aligned with a centered reinforcing beam 22 to follow the principal stress line of the fastening means 28, thereby optimizing the rigidity of the yoke plates 12a, 12b. Two inclined beams 26a, 26b are arranged to form an integral part with two additional reinforcing beams 22 arranged on both sides of the centered reinforcing beam.

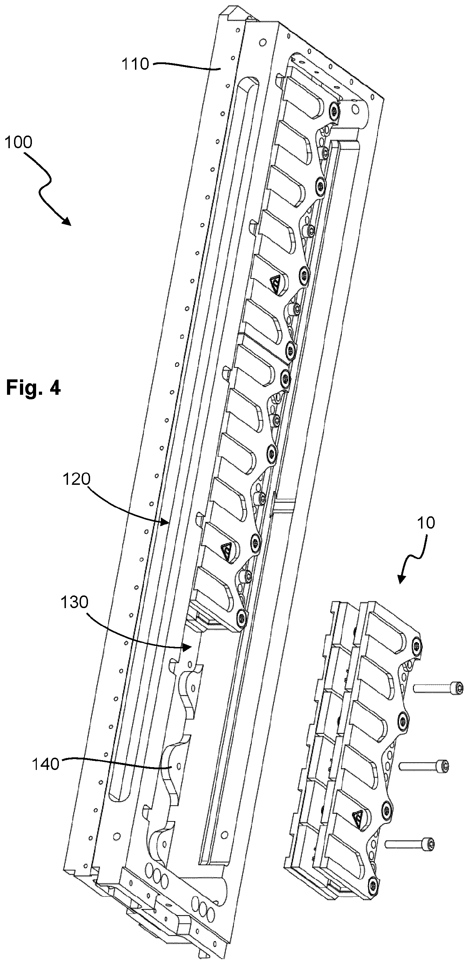

The spacer member opposite sides 32a, 32b further comprises multiple assembly holes 34, as shown in Figure 1, accessible between the plurality of legs 24 of the fixing part 20b of the reinforcing structure 20. These assembly holes 34, for example threaded bores, are designed for securing the secondary part 10 to a machine part or to a casing designed to be fixed to a machine part as described subsequently with reference to Figure 4. The spacer member 30 may comprise for example three, four or more assembly holes between two legs 24 to allow a greater flexibility to comply with the customer machine part requirements. These plurality of assembly holes also advantageously decrease the weight of the spacer member 30.

In a preferred embodiment, the fixing holes in spacer member 30 configured to accommodate fastening means 28 are identical to the assembly holes 34. In this way, the spacer member 30 comprises assembly holes 34 at a constant pitch on its entire length which can be used either as assembly holes, or for fastening the fixing part 20b.

In an embodiment, the reinforcing part 20a of the structure 20 comprises periodic reinforcing beams 22 along the magnetic path 40. These reinforcing beams 22 extend parallelly from each other from a top side to a bottom side of the outer side 14 of respective yoke plates 12a, 12b. Each reinforcing beam 22 is aligned with the interface between two adjacent permanent magnets, as shown in Figure 2, to keep the magnetic performance of the secondary part by guiding the magnetic field between two adjacent magnets of opposing polarity.

With reference to Figure 4, the ironless linear motor may comprise a secondary part assembly 100 made of several secondary parts 10 as described above. An end of the spacer member and of the yoke plates of each secondary part 10 are disposed adjacently inside a rectangular recess 130 of a casing 110 in the longitudinal direction of the magnetic path. The casing 110 comprises a longitudinal slit 120 aligned with the magnetic path of adjacent secondary parts 10 in which the glider (not shown) can be inserted.

The casing 110 of the secondary part assembly 100 further comprises fixing parts 140 against which the spacer member 30 of each secondary part 10 is fixedly mounted. The fixation of the spacer member 30 of each secondary part 10 directly on the fixing parts 140 of the casing advantageously ensure accurate placement of the permanent magnets in the casing since the spacer member 30 has very precise dimensions. This ensures that the glider (not shown) of the ironless linear motor is always well centered in the magnetic path 40 and never comes into contact with the permanent magnets 16a, 16b, even if the airgap is small to optimize motor performance, typically in the range of 0.1 to 1 mm.

The configuration of the fixing part 20a of the reinforcing structure 20 and the lightweight spacer member 30 reduce the overall weight of the secondary part 10 thereby improving the dynamic behaviour of a motion system comprising XY motorized linear stages such as semiconductor processing equipment.

While the invention has been illustrated and described in detail in the drawings and foregoing description, such illustration and description are to be considered illustrative or exemplary and not restrictive. It will be understood that changes and modifications may be made by those of ordinary skill within the scope of the appended claims. For example, the reinforcing beams are not necessarily straight and may extend along only a portion of the outer side of respective yoke plates. In addition, the width of each reinforcing beam may differ from each other, in particular on both lateral sides of respective yoke plates.

### Reference list

Secondary part 10
   Yoke plates 12a, 12b
      Inner side 13
      Outer side 14
   Permanent magnets 16a, 16b
   Reinforcing structure 20
      Reinforcing part 20a
         Reinforcing beams 22
      Fixing part 20b
         Leg 24
            Fastening bore 25 Inclined beams 26a, 26b
         Cut-out portions 27
   Fastening means 28
   Spacer member 30
      Opposite sides 32a, 32b
      Assembly holes 34
   Magnetic path 40
Secondary part assembly 100
   Casing 110
   Longitudinal slit 120
   Rectangular recess 130
   Fixing parts 140

## Claims

1. Secondary part (10) for an ironless linear motor, comprising two yoke plates (12a, 12b) having an inner side (13) and an outer side (14), a first and a second set of permanent magnets (16a, 16b) fixed on the inner side (14) of respective yoke plates (12a, 12b), a spacer member (30) mounted between the two yoke plates and a reinforcing structure (20) having a reinforcing part (20a) arranged on the outer side (14) of respective yoke plates (12a, 12b) and a fixing part (20b) fixed on respective opposite sides (32a, 32b) of the spacer member (30) such that the first and second set of permanent magnets (16a, 16b) are facing each other to define a magnetic path (40) for a primary part of the linear motor, **characterized in that** the fixing part (20b) of said reinforcing structure (20) covers less than 80% of the surface of respective opposite sides (32a, 32b) of the spacer member (30).

2. Secondary part (10) according to claim 1, wherein said fixing part (20b) covers less than 60%, preferably less than 50%, of the surface of respective opposite sides (32a, 32b) of the spacer member (30).

3. Secondary part (10) according to any preceding claim, wherein the reinforcing part (20a) of the reinforcing structure (20) comprises reinforcing beams (22) spaced apart from each other and extending from a top side to a bottom side of the outer side (14) of respective yoke plates (12a, 12b).

4. Secondary part (10) according to the preceding claim, wherein each reinforcing beam (22) has a rectangular shape and is centered at the interface between two adjacent permanent magnets (16a, 16b) of respective yoke plates (12a, 12b).

5. Secondary part (10) according to claim 3 or 4, wherein the fixing part (20) of the reinforcing structure (20) comprises legs (24) fixed to respective opposite sides (32, 32b) of the spacer member (30) and spaced apart from each other to form periodic cut-out portions (27) therebetween.

6. Secondary part (10) according to the preceding claim, wherein each leg (24) comprises a fastening bore (25) aligned with a centered reinforcing beam (22) and two inclined beams (26a, 26b) forming an integral part with two additional reinforcing beams (22) arranged on both sides of the centered reinforcing beam (22).

7. Secondary part (10) according to claim 5 or 6, wherein each cut-out portion (27) has a substantially triangular shape.

8. Secondary part (10) according to any of claim 5 to 7, wherein the spacer member (30) comprises a plurality of assembly holes (34) between each pair of legs (24) for fixing the secondary part (10) to a machine part.

9. Secondary part (10) according to any preceding claim, wherein the reinforcing part (20a) of the reinforcing structure (20) forms an integral part with respective yoke plates (12a, 12b).

10. Secondary part (10) according to any preceding claim, wherein the reinforcing structure (20) has a uniform thickness.

11. Secondary part (10) according to any preceding claim, wherein the spacer member (30) is in aluminum or in an aluminum alloy.

12. Secondary part assembly (100) comprising several secondary parts (10) according to any preceding claim, wherein the spacer member (30) and respective yoke plates (12a, 12b) of each secondary part (10) are disposed adjacently in the longitudinal direction of the magnetic path (40) with the spacer member and respective yoke plates of an adjacent secondary part.

13. Secondary part assembly (100) according to the preceding claim, wherein said assembly comprises a casing (110) having a rectangular recess (130) receiving said secondary parts (10), said recess (130) comprising fixing parts (140) against which the spacer member (30) of each secondary part is fixedly mounted.

14. Secondary part assembly (100) according to the preceding claim, wherein the casing (110) further comprises a longitudinal slit (120) aligned with the magnetic path (40) of each secondary part (10).

15. Ironless linear motor comprising the secondary part (10) according to any of claims 1 to 10 or the secondary part assembly according to claim 12 or 13, and a primary part movably mounted within the magnetic path (40) of said secondary part or said secondary part assembly.
